# DEMANDE DE BREVET EUROPEEN

(11) **EP 3 633 161 A1**
(43) Date de publication de la demande: **08.04.2020**
(21) Numéro de dépôt: 19196539.1
(22) Date de dépôt: 10.09.2019
(51) Int. Cl.: F02C 7/045, B32B 3/26, F02C 7/047, G10K 11/172

(54) **PROCÉDÉ DE FABRICATION D'UNE PEAU ACOUSTIQUE DÉGIVRANTE POUR PANNEAU ACOUSTIQUE D AÉRONEF, UTILISANT UN DISPOSITIF D ÉCARTEMENT DE FIBRES**

(30) Priorité: 01.10.2018 FR 1859048
(71) Demandeur: Airbus Operations SAS, 31060 Toulouse (FR)
(72) Inventeur: PORTE, Alain, 31770 COLOMIERS (FR); LALANE, Jacques, 31650 SAINT ORENS DE GAMEVILLE (FR); MENAY, Hassan, 44300 NANTES (FR)
(74) Mandataire: Gevers & Orès

(57) **Abrégé**

- Procédé de fabrication d'une peau acoustique dégivrante pour panneau acoustique d'aéronef, utilisant un dispositif d'écartement de fibres.
- Le procédé de fabrication comprend au moins une étape pour fabriquer un assemblage de couches comprenant une couche dégivrante (C2) pourvu de fibres électriquement conductrices noyées dans une résine et deux couches isolantes (C1, C3) agencées de part et d'autre de cette couche dégivrante (C2) et une étape de cuisson, ledit procédé prévoyant de mettre en place pendant la cuisson un dispositif d'écartement (5) sur l'assemblage de couches, le dispositif d'écartement (5) comprenant une pluralité de picots (6) traversant ledit assemblage de couches, des perforations (10) étant générées aux emplacements des picots (6) après le retrait du dispositif d'écartement (5), la mise en place du dispositif d'écartement (5) permettant de réaliser des perforations (10) de tailles et formes souhaitées, et ceci de façon simple et efficace, avec une durée de fabrication réduite.

## Description

### DOMAINE TECHNIQUE

La présente invention concerne un procédé de fabrication d'une peau acoustique dégivrante. Cette peau acoustique est destinée de préférence à un panneau d'atténuation acoustique pour aéronef, et en particulier pour un capot de nacelle de réacteur d'un aéronef.

### ETAT DE LA TECHNIQUE

On sait que sur un aéronef, par exemple sur un avion de transport, des bruits importants sont souvent générés, notamment par les ensembles propulsifs (ou réacteurs) de l'aéronef. Il est connu, pour réduire l'effet sonore produit par les réacteurs de l'aéronef de prévoir, en particulier au niveau des nacelles des réacteurs, des parois pourvues de panneaux présentant une bonne absorption acoustique. De façon usuelle, un panneau d'atténuation acoustique, dit panneau acoustique ci-après, comprend généralement une structure acoustique. Cette structure acoustique comporte souvent, une structure alvéolaire, en particulier en nid d'abeilles, et est munie sur ses deux faces, respectivement, d'une peau acoustique dite également peau résistive (« resistive skin » en anglais) qui est perforée et d'une peau arrière non perforée (« backing skin » en terme anglais). Le panneau acoustique est agencé pour que la peau acoustique soit située à proximité de la source de bruit, notamment en amont et/ou en aval de la soufflante (« fan » en anglais) dans le cas d'un réacteur d'aéronef, pour réaliser une absorption efficace du bruit généré en amont et aval de la soufflante.

En outre, pour assurer une fonction de dégivrage, par exemple d'une entrée d'air d'un réacteur, la peau acoustique doit être configurée pour être également dégivrante.

Il existe plusieurs méthodes usuelles pour former une peau acoustique (ou peau résistive) perforée, notamment dans le but d'obtenir un taux de perforation souhaité.

Une méthode usuelle consiste à assembler la peau acoustique séparément après cuisson, après l'avoir préalablement perforée par poinçonnage ou par un autre moyen (mécanique, laser, ...).

Selon une autre méthode usuelle, on peut également perforer la peau acoustique une fois que la pièce est finie (ce qui permet d'obtenir le taux de perforation souhaité), mais on génère, en général, uniquement des trous ronds par perforation mécanique.

Avec ces méthodes usuelles, les perforations (ou trous) sont généralement circulaires pour simplifier la fabrication et réduire le coût. Toutefois, ce type de perforation n'est optimal ni pour la fonction acoustique, ni pour la fonction structurelle (par rapport à des perforations oblongues par exemple).

De plus, pour mettre en oeuvre une fonction de dégivrage (d'une entrée d'air de réacteur par exemple), de façon électrique, il est connu de connecter les fibres (notamment de carbone) constituant la peau acoustique (ou résistive) à une source électrique afin de dégivrer la surface considérée par effet Joule. Toutefois, pour éviter tout risque avec l'environnement extérieur et pour prévenir les risques de manipulation liés à l'électricité, il est nécessaire de pouvoir isoler électriquement les fibres de carbone au niveau des perforations acoustiques. La mise en place d'une telle isolation électrique est complexe et longue.

Les méthodes de fabrication précitées d'une peau acoustique, en plus de présenter des inconvénients en termes de coût, de complexité et de temps de fabrication, ne sont pas applicables pour former une peau acoustique qui doit également être dégivrante.

### EXPOSÉ DE L'INVENTION

La présente invention a pour objet de remédier à ces inconvénients. Elle concerne un procédé de fabrication d'une peau acoustique dégivrante, en particulier pour un panneau d'atténuation acoustique d'un aéronef, qui permet de fabriquer de façon simple et précise et à coût réduit une peau acoustique dégivrante.

Selon l'invention, ledit procédé de fabrication comporte :
- une étape de fabrication consistant à fabriquer un assemblage de couches comprenant une pluralité de couches superposées, l'assemblage de couches comprenant au moins une couche dégivrante et deux couches isolantes agencées de part et d'autre de cette couche dégivrante, la couche dégivrante comprenant des fibres électriquement conductrices noyées dans une résine ;
- une étape d'écartement consistant à mettre en place un dispositif d'écartement sur l'assemblage de couches, le dispositif d'écartement comprenant une pluralité de picots, la mise en place du dispositif d'écartement consistant à faire traverser ledit assemblage de couches par lesdits picots ;
- une étape de cuisson consistant à soumettre l'ensemble formé de l'assemblage de couches et du dispositif d'écartement à une cuisson, pour polymériser l'assemblage de couches ; et
- une étape de retrait consistant à retirer le dispositif d'écartement de l'assemblage de couches polymérisé de manière à obtenir une peau acoustique pourvue d'une pluralité de perforations, lesdites perforations étant générées aux emplacements des picots après le retrait du dispositif d'écartement.

Ainsi, grâce à l'invention, le procédé de fabrication permet de former une peau acoustique qui est également dégivrante. De plus, comme précisé ci-dessous, le procédé de fabrication permet de conserver un matériau isolant autour des fibres (électriquement conductrices) au niveau des perforations, ce qui assure une continuité de la fonction de dégivrage (mise en oeuvre par ces fibres) et permet de ne pas avoir de fibres apparentes.

En outre, grâce notamment à la mise en place du dispositif d'écartement, le procédé de fabrication permet de réaliser des perforations de tailles et formes souhaitées, et ceci de façon simple et efficace, avec une durée de fabrication réduite.

Avantageusement, le dispositif d'écartement comprend au moins une plaque comprenant deux faces, lesdits picots étant agencés en saillie sur l'une desdites faces de la plaque.

En outre, de façon avantageuse, chacun desdits picots présente une forme allongée comprenant une première extrémité longitudinale par laquelle le picot est fixé à la plaque et une seconde extrémité longitudinale pourvue d'une pointe, et chacun desdits picots comprend, entre les première et seconde extrémités longitudinales, un tronc à section transversale sensiblement constante.

Par ailleurs, de façon avantageuse, pour au moins certains desdits picots :
- la section transversale du tronc présente une surface incluse dans un cercle de diamètre compris entre 0,8 et 1 millimètre ; et/ou
- la section transversale du tronc présente l'une des formes suivantes : ronde, polygonale, oblongue, elliptique, en forme de goutte d'eau.

En outre, avantageusement :
- l'assemblage de couches comporte une couche auxiliaire pourvue d'un grillage (« wiremesh »), par exemple métallique ou polymère ; et/ou
- les fibres de la couche dégivrante sont en carbone.

Dans un mode réalisation particulier, le nombre et la surface de la section transversale des picots sur la plaque sont adaptés pour créer un nombre et une taille de perforations dans la peau acoustique permettant de conférer à ladite peau acoustique une absorption acoustique privilégiée dans au moins une gamme de fréquences acoustiques donnée.

De plus, avantageusement, le dispositif d'écartement comporte au moins deux zones différentes, le nombre et la surface de la section transversale des picots sur une première desdites zones sont adaptés afin de conférer à une première partie de la peau acoustique une absorption acoustique privilégiée dans au moins une première gamme de fréquences acoustiques, et le nombre et la surface de la section transversale des picots sur la seconde desdites zones sont adaptés afin de conférer à une seconde partie de la peau acoustique une absorption acoustique privilégiée dans au moins une seconde gamme de fréquences acoustiques, ladite seconde gamme de fréquences acoustiques étant différente de ladite première gamme de fréquences acoustiques.

Par ailleurs, de façon avantageuse, l'étape d'écartement consiste à générer un déplacement relatif entre le dispositif d'écartement et l'assemblage de couches de manière à mettre en place le dispositif d'écartement.

En outre, de façon avantageuse, l'étape d'écartement consiste à générer des perforations de surface réduite au niveau d'une face dite aérodynamique de l'assemblage de couches, par rapport à l'intérieur de l'assemblage de couches.

La présente invention concerne également une peau acoustique dégivrante, obtenue par la mise en oeuvre d'un procédé de fabrication tel que celui décrit ci-dessus.

La présente invention concerne, en outre, une méthode de fabrication d'un panneau acoustique comportant une structure acoustique pourvue d'une structure alvéolaire, d'une peau acoustique dégivrante et d'une peau arrière.

Selon l'invention, ladite méthode de fabrication comporte un procédé de fabrication tel que celui décrit ci-dessus, qui est mis en oeuvre au moins pour fabriquer ladite peau acoustique.

Dans un premier mode de réalisation préféré, la méthode de fabrication comporte au moins la pluralité d'opérations successives suivantes :
- une opération de fabrication de la peau acoustique dégivrante, en mettant en oeuvre ledit procédé de fabrication ;
- une opération de fabrication de la structure alvéolaire ;
- une opération de fabrication de la peau arrière ; et
- une opération de fixation de la peau acoustique dégivrante et de la peau arrière de part et d'autre de la structure alvéolaire.

En outre, dans un second mode de réalisation, la méthode de fabrication est telle que :
- l'étape de fabrication dudit procédé de fabrication consiste à fabriquer un ensemble monobloc comprenant une structure alvéolaire, une peau arrière et une peau acoustique dégivrante, ladite peau acoustique dégivrante correspondant audit assemblage de couches ; et
- l'étape de cuisson dudit procédé de fabrication consiste à réaliser une cuisson de l'ensemble monobloc ainsi formé pour obtenir la structure acoustique qui est monobloc.

La présente invention concerne également un panneau acoustique, obtenu par la mise en oeuvre d'une méthode de fabrication telle que celle décrite ci-dessus.

### BRÈVE DESCRIPTION DES FIGURES

Les figures annexées feront bien comprendre comment l'invention peut être réalisée. Sur ces figures, des références identiques désignent des éléments semblables. Plus particulièrement :
- les figures 1A, 1B, 1C et 1D sont des vues schématiques, en coupe, d'un assemblage de couches et d'un dispositif d'écartement lors de la mise en oeuvre, respectivement, d'étapes successives d'un procédé de fabrication d'une peau acoustique dégivrante ;
- la figure 2 est une vue schématique, partielle et en perspective, d'une peau acoustique dégivrante ;
- la figure 3 est une vue schématique, partielle et en perspective, d'un dispositif d'écartement ;
- la figure 4 est une vue schématique, en coupe, montrant un picot d'un dispositif d'écartement traversant un assemblage de couches ;
- les figures 5A, 5B, 5C, 5D, 5E et 5F sont des vues schématiques de sections transversales différentes de troncs de picots ;
- la figure 6 est une vue schématique, en perspective, d'une peau acoustique dégivrante reliée à une source de courant électrique ;
- la figure 7 est une vue schématique, partielle et en coupe, d'un panneau acoustique pourvu d'une peau acoustique dégivrante ;
- la figure 8 est une vue schématique, en coupe, montrant un premier mode de réalisation d'une mise en place d'un dispositif d'écartement sur un assemblage de couches ;
- la figure 9 est une vue schématique, en coupe, montrant un second mode de réalisation d'une mise en place d'un dispositif d'écartement sur un assemblage de couches ; et
- les figures 10A, 10B et 10C sont des vues schématiques partielles de picots, respectivement dans des modes de réalisation différents.

### DESCRIPTION DÉTAILLÉE

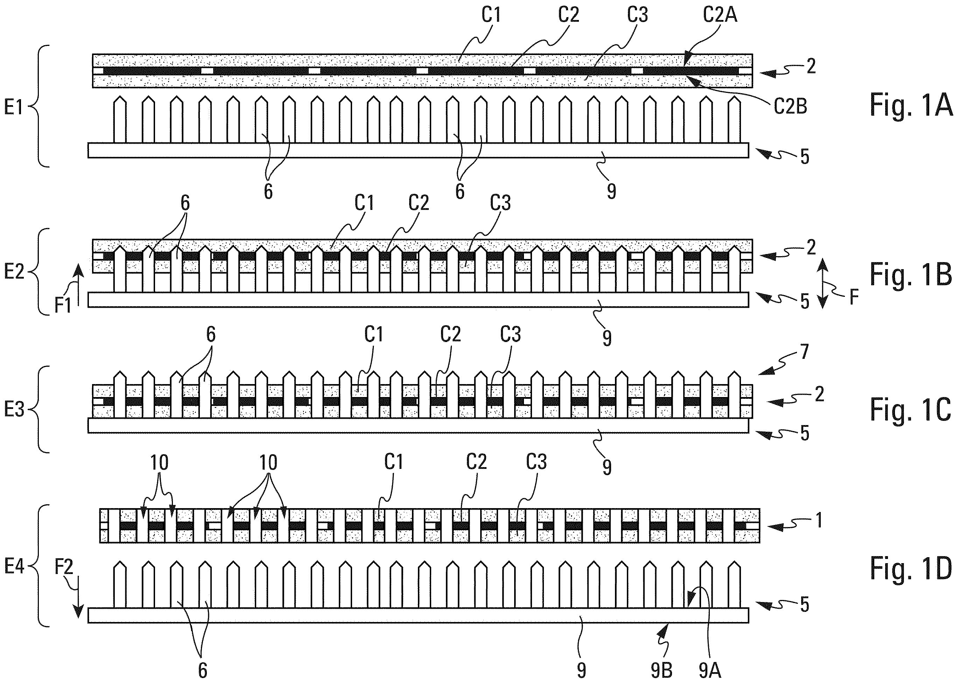

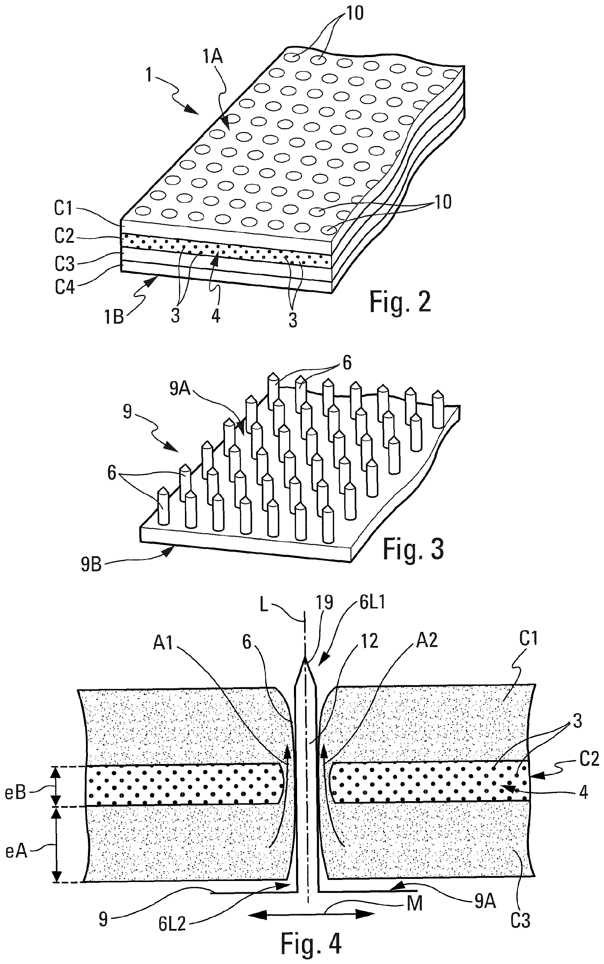

Le procédé de fabrication, représenté schématiquement sur la figure 1 à titre de mode de réalisation particulier, est destiné à fabriquer une peau acoustique 1 dégivrante, telle que représentée par exemple sur la figure 2.

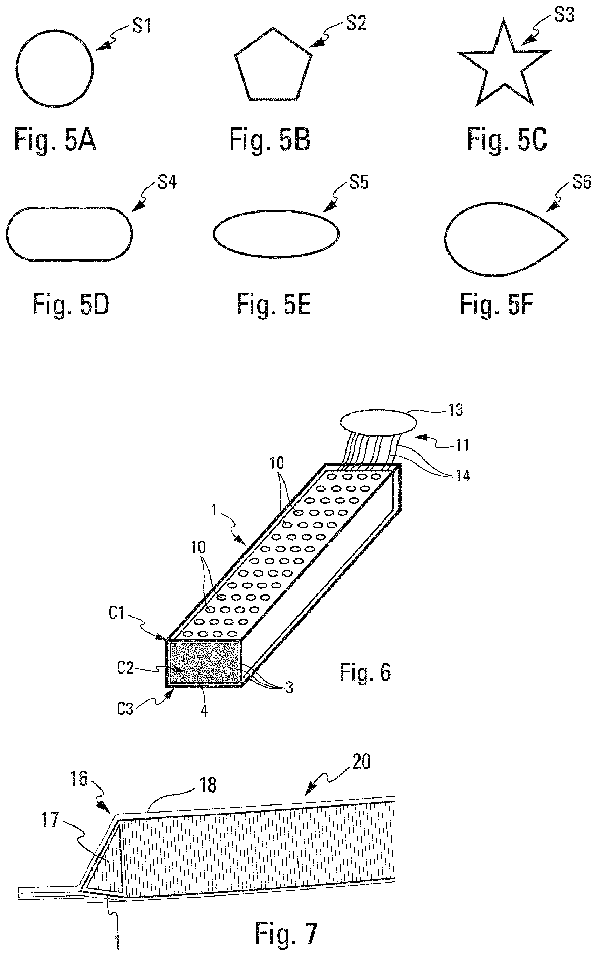

Bien que non exclusivement, cette peau acoustique 1 est destinée plus particulièrement à faire partie d'un panneau acoustique 20 (ou panneau d'atténuation acoustique), comme précisé ci-dessous en référence à la figure 7.

La peau acoustique 1 est pourvue d'une pluralité de perforations (ou trous, évidements, ajournements) 10, traversant ladite peau acoustique 1 de part en part, entre les faces 1A et 1B de ladite peau acoustique 1, lesdites perforations 10 étant représentées par des ronds sur la figure 2 notamment. La peau acoustique 1 présente ainsi une perméabilité à l'air, donc sonore, au moins à des sons devant être atténués par ladite peau acoustique 1. Une absorption acoustique est ainsi réalisée par la peau acoustique 1 au moyen desdites perforations 10. De plus, la peau acoustique 1 comprend un système de dégivrage 11 (ou de génération de chaleur) partiellement intégré, permettant de mettre en oeuvre une fonction de dégivrage, comme précisé ci-dessous en référence à la figure 6.

Selon l'invention, ledit procédé de fabrication comporte, comme représenté respectivement sur les figures 1A à 1D, une pluralité d'étapes E1 à E4 successives. Plus précisément, le procédé de fabrication comporte :
- une étape de fabrication E1 consistant à fabriquer un assemblage de couches 2. Cet assemblage de couches 2 comprend une pluralité de couches C1, C2 et C3 superposées. L'assemblage de couches 2 comprend, au moins, une couche dégivrante C2 et deux couches isolantes C1 et C3 qui sont agencées de part et d'autre de cette couche dégivrante C2. Ces couches isolantes C1 et C3 sont réalisées dans un matériau électriquement isolant. Comme représenté sur la figure 1A, la couche isolante C1 est agencée sur une face C2A de la couche dégivrante C2 et la couche isolante C3 est agencée sur une face C2B de la couche dégivrante C2, opposée à ladite face C2A. La couche dégivrante C2 est pourvue d'une pluralité de fibres 3 électriquement conductrices qui sont noyées dans une résine 4 (isolante), comme représenté sur la figure 2 ;
- une étape d'écartement E2 consistant à mettre en place un dispositif d'écartement 5 sur l'assemblage de couches 2. Le dispositif d'écartement 5 comprend une pluralité de picots 6, comme précisé ci-dessous. La mise en place du dispositif d'écartement 5 sur l'assemblage de couches 2 consiste à faire traverser ledit assemblage de couches 2 par lesdits picots 6 du dispositif d'écartement 5, comme également précisé ci-après ;
- une étape de cuisson E3 consistant à soumettre l'ensemble 7 formé de l'assemblage de couches 2 et du dispositif d'écartement 5 à une cuisson, pour polymériser l'assemblage de couches 2 ; et
- une étape de retrait E4 consistant à retirer le dispositif d'écartement 5 de l'assemblage de couches 2 polymérisé, c'est-à-dire consistant à retirer les picots 6 de l'assemblage de couches 2 polymérisé, de manière à obtenir une peau acoustique 1 pourvue d'une pluralité de perforations 10 traversant la peau acoustique 1. Les perforations 10 sont formées aux emplacements des picots 6 après le retrait de ces derniers de l'assemblage de couches 2.

Les fibres 3 peuvent être réalisées en différents matériaux électriquement conducteurs. De préférence, ces fibres 3 sont en carbone. La résine 4 peut être réalisée en différents matériaux tels que, par exemple, du verre ou une résine thermoplastique. De même, le matériau électriquement isolant des couches isolantes C1 et C3 peut être réalisé en différents matériaux et notamment en verre.

Dans un mode de réalisation particulier, l'étape de fabrication E1 consiste à fabriquer un assemblage de couches 2 comprenant, en plus desdites couches C1 à C3, une ou plusieurs couches auxiliaires, comme représenté à titre d'illustration pour une couche auxiliaire C4 sur la figure 2. La couche auxiliaire C4 peut être située à différentes positions par rapport aux autres couches C1 à C3.

A titre d'exemple, l'assemblage de couches 2 peut comporter une couche auxiliaire pourvue d'un grillage (« wiremesh »), par exemple métallique ou polymère tissé très finement afin d'être perméable au son, tout en permettant notamment de limiter les interactions aérodynamiques et de réduire la traînée.

Par ailleurs, l'étape d'écartement E2 consiste à générer un déplacement relatif entre le dispositif d'écartement 5 et l'assemblage de couches 2, comme illustré par une double flèche F sur la figure 1B de manière à mettre en place le dispositif d'écartement 5 dans la position représentée sur la figure 1C.

Pour ce faire, dans un mode de réalisation préféré, on prévoit une unité de déplacement usuelle (non représentée) pour déplacer le dispositif d'écartement 5 vers l'assemblage de couches 2 qui est immobile, comme illustré par une flèche F1 sur la figure 1B. En variante, on peut également prévoir une unité de déplacement usuelle pour déplacer l'assemblage de couches 2 vers le dispositif d'écartement 5 qui est immobile.

Le dispositif d'écartement 5 comporte au moins une plaque 9 comprenant deux faces 9A et 9B, comme représenté sur la figure 3. Les picots 6 sont agencés en saillie sur la face 9A de la plaque 9. De préférence, les picots 6, par exemple en acier, sont fixés à la face 9A, sensiblement orthogonalement à cette face 9A.

Dans un mode de réalisation particulier, les picots 6 peuvent être agencés pour présenter une certaine flexibilité, notamment pour faciliter leur insertion dans l'assemblage de couches 2.

Dans le cadre de la présente invention, le dispositif d'écartement 5 peut comporter :
- soit une seule plaque 9, comme celle représentée sur la figure 3 ;
- soit une pluralité de telles plaques 9 agencées, de préférence, les unes à côté des autres.

Comme représenté à titre d'illustration sur la figure 4, chacun desdits picots 6 présente une forme allongée d'axe longitudinal L. De préférence, cet axe longitudinal L est sensiblement orthogonal à la face 9A de la plaque 9, et à une direction M située dans le plan de la face 9A et représentée à titre d'illustration sur la figure 4. Chacun desdits picots 6 comprend une extrémité longitudinale 6L2 par laquelle le picot 6 est fixé à la face 9A de la plaque 9 et une extrémité longitudinale 6L1 pourvue d'une pointe 19. Cette pointe 19 facilite l'insertion du picot 6 dans l'assemblage de couches 2. Le picot 6 comprend, entre les extrémités longitudinales 9A et 9B, un tronc 12 central, à section transversale S sensiblement constante.

La section transversale S du tronc 12 desdits picots 6 peut présenter une variété de formes différentes. A titre d'illustration, la section transversale peut présenter, par exemple, l'une des formes suivantes représentées sur les figures 5A à 5F :
- une forme ronde (section transversale S1 de la figure 5A) ;
- une forme polygonale, par exemple un pentagone (section transversale S2 de la figure 5B) ou une étoile (section transversale S3 de la figure 5C) ;
- une forme oblongue (section transversale S4 de la figure 5D) ;
- une forme elliptique (section transversale S5 de la figure 5E) ;
- une forme de goutte d'eau (section transversale S6 de la figure 5F).

Dans un mode de réalisation préféré, la section transversale S du tronc 12 présente une surface incluse dans un cercle de diamètre compris entre 0,8 et 1 millimètre.

Chaque perforation 10 présente donc une forme similaire à la section transversale S du tronc 12 du picot 6 qui a généré cette perforation 10.

Ces sections transversales S1 à S6 variées permettent donc, par un choix approprié des picots 6, de prévoir des formes des perforations 10, variées et telles que souhaitées.

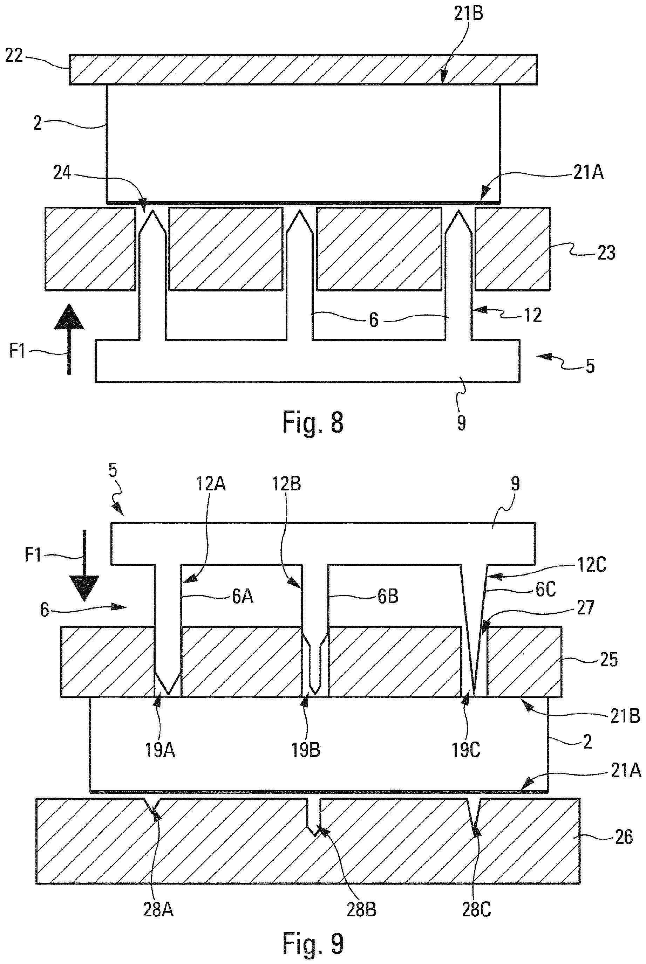

L'assemblage de couches 2 comporte deux faces externes, à savoir une face dite aérodynamique 21A destinée généralement à venir en contact d'un flux aérodynamique et une face dite arrière 21B opposée à cette face aérodynamique 21A, comme représenté sur les figures 8 et 9. La face aérodynamique 21A est représentée par un trait épais sur les figures 8 et 9. Lors de la mise en oeuvre de l'étape d'écartement E2, pour la place du dispositif d'écartement 5 sur l'assemblage de couches 2 dans le sens F1 (figure 1B), il est envisageable d'introduire les picots 6 dans l'assemblage de couches 2, soit par la face aérodynamique 21A, soit par la face arrière 21B.

Dans un premier mode de réalisation représenté sur la figure 8, le dispositif d'écartement 5 est configuré pour que les picots 6 pénètrent par la face aérodynamique 21A dans l'assemblage de couches 2. Pour ce faire, le dispositif d'écartement 5 comporte, en plus de la plaque 9 pourvue des picots 6, d'un outillage d'appui 22, par exemple une plaque, contre lequel prend appui l'assemblage de couches 2 avec sa face arrière 21B, et un guide 23 pourvu d'ouvertures 24 traversantes. Les ouvertures 24 présentent une forme et un diamètre adaptés à ceux du tronc 12 des picots 6 de manière à permettre un passage des picots 6 tout en assurant un guidage.

En outre, dans un second mode de réalisation représenté sur la figure 9, le dispositif d'écartement 5 est configuré pour que les picots 6 pénètrent par la face arrière 21B dans l'assemblage de couches 2. Pour ce faire, le dispositif d'écartement 5 comporte, en plus de la plaque 9 pourvue des picots 6, de deux guides 25 et 26 agencés de part et d'autre de l'assemblage de couches 2, respectivement sur les faces 21B et 21A. A titre d'illlustration, on a représenté sur la figure 9, trois exemples de réalisation différents des picots 6A, 6B et 6C.

Le guide 25, par lequel sont introduits les picots 6A, 6B et 6C dans l'assemblage de couches 2, est pourvu d'ouvertures 27 traversantes de forme et diamètre adaptés à ceux du tronc 12 des picots de manière à permettre un passage des picots 6A, 6B et 6C tout en servant de guide.

Le guide 26, quant à lui, est pourvu d'évidements 28A, 28B et 28C borgnes, de forme et diamètre adaptés aux pointes 19A, 19B et 19C des picots 6A, 6B et 6C respectifs de manière à permettre l'insertion des pointes 19A, 19B et 19C dans ces évidements 28A, 28B et 28C, puis leur arrêt (et ainsi stopper le mouvement de la plaque 9 lors de son déplacement dans le sens F1).

Ce second mode de réalisation est configuré pour que la face aérodynamique 21A soit uniquement traversée par la pointe 19A, 19B et 19C des picots 6A, 6B et 6C (ou une partie de leur pointe) et non pas par leur tronc 12A, 12B et 12C respectif. Ainsi, la face aérodynamique 21A présente une perforation de surface réduite par rapport à l'intérieur de l'assemblage de couches 2. Ceci permet de réduire d'éventuelles perturbations aérodynamiques au niveau de la face aérodynamique 21A et ainsi de réduire la traînée.

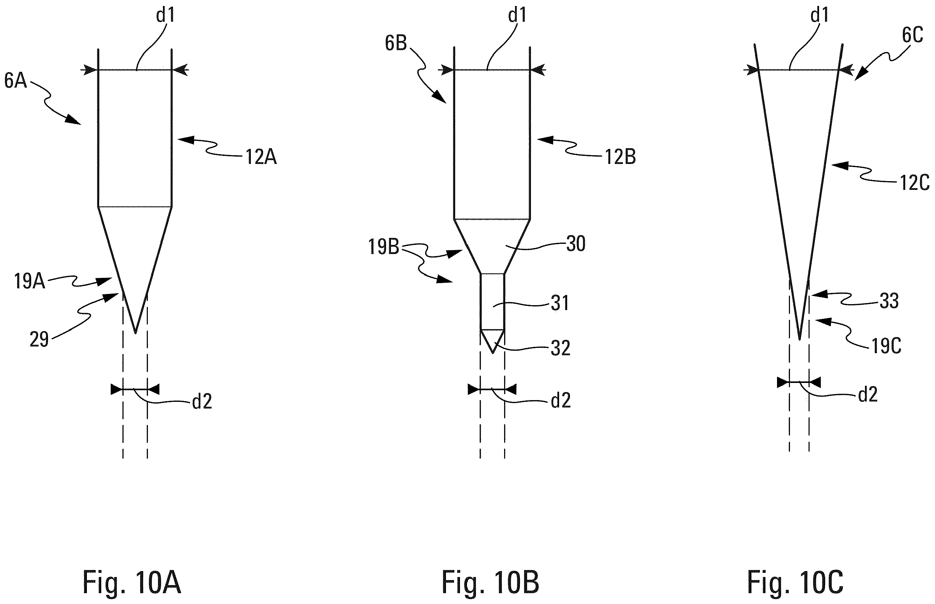

Les trois exemples de réalisation différents des picots 6A, 6B et 6C montrés sur la figure 9 sont représentés, partiellement, avec une taille agrandie respectivement sur les figures 10A, 10B et 10C. Dans le cadre de la présente invention, la plaque 9 peut comporter un seul type de picots ou plusieurs types diffférents de picots.

Le picot 6A comprend un tronc 12A cylindrique de diamètre d1 et une pointe 19A conique, comme représenté sur la figure 10A. Le dispositif d'écartement 5 est configuré, en lien avec les caractéristiques du picot 6A, pour que ce dernier perce la face aérodynamique 21A, longitudinalement, au niveau d'une zone 29 (de diamètre d2 inférieur au diamètre d1) de sa pointe 19A conique.

En outre, le picot 6B comprend un tronc 12B cylindrique de diamètre d1 et une pointe 19B, comme représenté sur la figure 10B. La pointe 19B comporte un tronçon cylindrique 31 de diamètre d2, pourvu d'une extrémité pointue 32. Le tronçon cylindrique 31 est lié au tronc 12B par l'intermédiaire d'un tronçon conique 30. Le dispositif d'écartement 5 est configuré, en lien avec les caractéristiques du picot 6B, pour que ce dernier perce la face aérodynamique 21A avec le tronçon cylindrique 31 de diamètre d2.

Par ailleurs, comme représenté sur la figure 10C, le picot 6C comprend un tronc 12C conique se terminant en pointe (pointe 19C), et dont le diamètre au niveau de la liaison à la plaque 9 est sensiblement égal à d1. Le dispositif d'écartement 5 est configuré, en lien avec les caractéristiques du picot 6C, pour que ce dernier perce la face aérodynamique 21A, longitudinalement, au niveau d'une zone 33 (de diamètre d2) de la pointe 19C.

Dans les exemples précités, d2 est inférieur à d1 et est, de préférence, sensiblement égal à 0,3xd1. A titre d'illustration, d1 est sensiblement égal à 1 mm et d2 est sensiblement égal à 0,3 mm.

A l'étape d'écartement E2, lors de l'introduction des picots 6 dans l'assemblage de couches 2 dans le sens F1, la couche dégivrante C2 étant de préférence fine comparée à la couche isolante C3, une partie du matériau isolant de la couche isolante C3 va s'insérer entre le picot 6 et la couche dégivrante C2, comme illustré par des flèches A1 et A2 sur la figure 4, créant ainsi une isolation électrique de l'ensemble de la couche dégivrante C2.

Dans le cadre de la présente invention, la couche isolante C3, par laquelle sont introduits les picots 6, présente une épaisseur eA qui est supérieure à l'épaisseur eB de la couche dégivrante C2, comme représenté sur la figure 4. De préférence, le rapport eA/eB est compris entre 1,3 et 3.

La mise en place du dispositif d'écartement 5 permet ainsi de conserver un isolant autour des fibres 3 au niveau des perforations 10, ce qui assure une continuité de la fonction de dégivrage et permet de ne pas avoir de fibres 3 (électriquement conductrices) apparentes au niveau des perforations 10.

La couche dégivrante C2 peut être très fine, car les perforations 10 sont discrètes et la chaleur va donc se diffuser sur toute la surface. A titre d'illustration, pour dégivrer une entrée d'air de réacteur, l'épaisseur nécessaire de la couche dégivrante C2 peut être de l'ordre de 0,1 millimètre. Dans cet exemple, les deux couches isolantes C1 et C3 peuvent avoir une épaisseur de l'ordre de 0,3 millimètre.

Les picots 6 du dispositif d'écartement 5 permettent donc de traverser les couches C1 à C3 pendant le procédé de fabrication, tout en assurant une isolation électrique des fibres 3 électriquement conductrices.

Grâce notamment à la mise en place du dispositif d'écartement 5, le procédé de fabrication permet de réaliser des perforations 10 de façon simple et efficace. En outre, le procédé de fabrication permet de réaliser des perforations de forme et/ou de dimensions variées et ainsi d'obtenir un taux de surface ouverte (TSO) souhaité sur la peau acoustique 1. On entend par « taux de surface ouverte » le rapport, sur une zone donnée de la peau acoustique, entre la surface globale perforée (par lesdites perforations 10) et la surface totale de ladite zone. A titre d'illustration, ce taux peut, par exemple, être compris entre 4% et 10%.

Lesdits picots 6 mettent, par conséquent, en oeuvre des fonctions à la fois de génération de perforation, d'écartement de fibres et de mise en place d'isolant.

En prévoyant un nombre approprié de picots 6, on peut former toutes les perforations, généralement plusieurs milliers, de la peau acoustique 1 en une fois.

Chaque picot 6 peut être fixe ou légèrement flexible afin de faciliter l'insertion ou le démoulage ou toutes autres fonctions. La répartition des picots 6 peut être réalisée de façon aléatoire ou ordonnée notamment en fonction du taux TSO souhaité dans les différentes zones acoustiques.

Dans un mode réalisation préféré, le nombre et la surface de la section transversale S des picots 6 sur la plaque 9 sont adaptés pour créer un nombre et une taille de perforations 10 (et ainsi notamment un taux de surface ouverte donné) dans la peau acoustique 1 permettant de conférer à ladite peau acoustique 1 une absorption acoustique privilégiée dans au moins une gamme de fréquences acoustiques donnée.

On entend par « absorption acoustique privilégiée » dans une gamme de fréquences acoustiques considérée, le fait que la peau acoustique 1 possède des propriétés acoustiques lui permettant d'absorber efficacement des bruits présentant des fréquences faisant partie de ladite gamme de fréquences acoustiques considérée, et ceci qu'elle soit en mesure ou non d'absorber des bruits ayant des fréquences hors de ladite gamme.

Dans une première variante de réalisation de ce mode réalisation préféré, la répartition des picots 6 sur la plaque 9, comme représenté par exemple sur la figure 3, est uniforme de sorte que toutes les parties de la peau acoustique 1 sont configurées pour absorber la même ou les mêmes gammes de fréquences acoustiques.

En outre, dans une seconde variante de réalisation (non représentée), de ce mode réalisation préféré, le dispositif d'écartement 5 comporte au moins deux zones différentes. Le nombre et la surface de la section transversale des picots sur une première desdites zones sont adaptés afin de conférer à une première partie de la peau acoustique une absorption acoustique privilégiée dans au moins une première gamme de fréquences acoustiques, et le nombre et la surface de la section transversale des picots sur la seconde desdites zones sont adaptés afin de conférer à une seconde partie de la peau acoustique une absorption acoustique privilégiée dans au moins une seconde gamme de fréquences acoustiques, ladite seconde gamme de fréquences acoustiques étant différente de ladite première gamme de fréquences acoustiques.

On peut ainsi prévoir différentes zones de la peau acoustique 1 (et d'un panneau acoustique qui la comporte, comme précisé ci-dessous) qui sont appropriées, chacune, à l'absorption de bruits de fréquences particulières. Cette seconde variante de réalisation est notamment avantageuse en présence de sources de bruits différentes, présentant des fréquences différentes et localisées à des endroits différents. Le peau acoustique 1 est alors configurée et disposée pour que chacune de ces zones soit située le plus près possible de la source de bruit qu'elle doit atténuer.

Ensuite, à l'étape de cuisson E3, l'ensemble 7 formé de l'assemblage de couches 2 et du dispositif d'écartement 5 est soumis, de façon usuelle, à une cuisson, pour polymériser l'assemblage de couches 2.

Dans le cadre de la présente invention, les couches peuvent-être liées ensemble de différentes manières usuelles (par exemple de type « curing » (durcissement), « bounding » (liaison), « co-curing » (co-durcissement), « co-bounding » (co-liaison) ou autre) non décrites davantage dans la présente description.

Finalement, l'étape de retrait E4 consiste à générer un déplacement relatif entre le dispositif d'écartement 5 et l'assemblage de couches 2, pour les séparer l'un de l'autre de manière à obtenir la situation représentée sur la figure 1D.

Pour ce faire, dans un mode de réalisation préféré, l'unité de déplacement usuelle (non représentée) éloigne le dispositif d'écartement 5 de l'assemblage de couches 2 qui est immobile, comme illustré par une flèche F2 sur la figure 1D. En variante, on peut également prévoir que l'unité de déplacement éloigne l'assemblage de couches 2 du dispositif d'écartement 5 qui est immobile.

Par ailleurs, dans le cadre de la présente invention, la peau acoustique 1 (et le cas échéant un ensemble ou une partie d'un panneau acoustique qui la comporte) peut être plane, comme représenté sur la figure 2, ou être incurvée (simple ou double courbure, convexe et/ou concave).

Le procédé de fabrication, tel que décrit ci-dessus, présente de nombreux avantages. Il permet notamment :
- de fabriquer un panneau acoustique 1 qui présente une double fonction (d'atténuation acoustique et de dégivrage) ;
- de réaliser des perforations 10 de façon simple et efficace. Le procédé de fabrication permet de réaliser des perforations de forme et/ou de dimensions variées et ainsi de faire varier le taux de surface ouverte (TSO) et la forme des perforations sur la même peau acoustique 1, ce qui permet notamment d'optimiser la fonction d'atténuation acoustique ;
- de réduire le temps de fabrication ;
- de conserver un élément isolant autour des fibres 3 électriquement conductrices au niveau des perforations 10, ce qui assure une continuité de la fonction de dégivrage et permet de ne pas avoir de fibres 3 apparentes.

Pour mettre en oeuvre la fonction de dégivrage, les fibres 3 (électriquement conductrices) de la peau acoustique 1 sont liées par des connexions 14 à une source (ou alimentation) électrique 13 du système de dégivrage 11 (ou de génération de chaleur), comme représenté schématiquement sur la figure 6. Ce système de dégivrage 11 permet de réaliser un dégivrage par effet Joule.

Dans une application préférée, le procédé de fabrication, tel que décrit ci-dessus, est utilisé dans une méthode de fabrication d'un panneau acoustique 20, comme celui représenté schématiquement et partiellement dans un mode de réalisation particulier sur la figure 7.

De façon usuelle, ce panneau acoustique 20 comprend une structure acoustique 16 qui est apte à absorber du bruit pour l'atténuer. Cette structure acoustique 16 comporte, comme représenté sur la figure 7 :
- une structure alvéolaire 17, en particulier en nid d'abeilles ;
- une peau acoustique 1 (ou résistive) qui est dégivrante, telle que celle décrite ci-dessus ; et
- une peau 18 dite arrière, réflectrice dans la zone alvéolaire (« backing skin » en anglais), pour fermer le panneau acoustique 20. Cette peau arrière 18 est non perforée, sauf éventuellement localement pour des raisons de drainage d'eau.

La peau acoustique 1 et la peau arrière 18 sont agencées et fixées sur la structure alvéolaire 17.

L'absorption acoustique est réalisée par la peau acoustique 1. Dans certains modes de réalisation, la structure alvéolaire 17 peut participer à l'absorption acoustique.

Généralement, le panneau acoustique 20 est disposé pour que la peau acoustique 1 soit positionnée à proximité et de préférence proche (ou en regard) de la source de bruit à atténuer. La peau acoustique 1 est agencée plus près de la source de bruit que la peau arrière 18.

Si la peau acoustique 1 est aérodynamique, c'est-à-dire si elle est en contact avec le flux d'air, la surface de la peau acoustique 1 est agencée dans le lit de l'écoulement. La peau arrière 18 peut également être aérodynamique (en contact avec le flux aérodynamique) selon les configurations et l'installation du panneau acoustique 20 sur l'aéronef. La peau arrière 18 a notamment pour fonction d'assurer la tenue structurelle de la structure acoustique 16.

Dans un premier mode de réalisation (préféré), la méthode de fabrication comporte au moins la pluralité d'opérations successives suivantes :
- une opération de fabrication de la peau acoustique 1, en mettant en oeuvre le procédé de fabrication décrit ci-dessus ;
- une opération de fabrication, usuelle, de la structure alvéolaire 17 ;
- une opération de fabrication, usuelle, de la peau arrière 18 ; et
- une étape de fixation, usuelle, de la peau acoustique 1 et de la peau arrière 18, sur la structure alvéolaire 17.

En outre, dans un second mode de réalisation, la méthode de fabrication se base sur le procédé de fabrication précité et elle est telle que :
- l'étape de fabrication E1 (figure 1A) du procédé de fabrication consiste à fabriquer un ensemble monobloc comprenant une structure alvéolaire 17, une peau arrière 18 et une peau acoustique 1 (figure 7), ladite peau acoustique 1 correspondant audit assemblage de couches 2 ; et
- l'étape de cuisson E3 (figure 1C) dudit procédé de fabrication consiste à réaliser une cuisson de l'ensemble monobloc ainsi formé pour obtenir la structure acoustique 16 qui est monobloc.

Dans une application préférée (non représentée), le panneau acoustique 20, ainsi fabriqué, est destiné à permettre de réduire le bruit sur une nacelle (non représentée) d'un ensemble propulsif (ou réacteur) d'un aéronef. Le panneau acoustique 20 est agencé dans l'entrée d'air de l'ensemble propulsif. Dans cette application préférée, le panneau acoustique 20 met également en oeuvre une fonction de dégivrage, grâce à ladite peau acoustique 1 qui est dégivrante.

## Revendications

1. Procédé de fabrication d'une peau acoustique dégivrante,
**caractérisé en ce qu'**il comporte :
- une étape de fabrication (E1) consistant à fabriquer un assemblage de couches (2) comprenant une pluralité de couches (C1 à C4) superposées, l'assemblage de couches (2) comprenant au moins une couche dégivrante (C2) et deux couches isolantes (C1, C3) agencées de part et d'autre de cette couche dégivrante (C2), la couche dégivrante (C2) comprenant des fibres (3) électriquement conductrices noyées dans une résine (4) ;
- une étape d'écartement (E2) consistant à mettre en place un dispositif d'écartement (5) sur l'assemblage de couches (2), ledit dispositif d'écartement (5) comprenant une pluralité de picots (6), la mise en place du dispositif (5) d'écartement consistant à faire traverser ledit assemblage de couches (2) par lesdits picots (6) ;
- une étape de cuisson (E3) consistant à soumettre l'ensemble (7) formé de l'assemblage de couches (2) et du dispositif d'écartement (5) à une cuisson, pour polymériser l'assemblage de couches (2) ; et
- une étape de retrait (E4) consistant à retirer le dispositif d'écartement (5) de l'assemblage de couches (2) polymérisé de manière à obtenir une peau acoustique (1) pourvue d'une pluralité de perforations (10), lesdites perforations (10) étant générées aux emplacements des picots (6) après le retrait du dispositif d'écartement (5).

2. Procédé de fabrication selon la revendication 1,
**caractérisé en ce que** le dispositif d'écartement (5) comprend au moins une plaque (9) comprenant deux faces (9A, 9B), ladite pluralité de picots (6) étant agencés en saillie sur l'une (9A) desdites faces (9A, 9B) de la plaque (9).

3. Procédé de fabrication selon la revendication 2,
**caractérisé en ce que** chacun desdits picots (6) présente une forme allongée comprenant une première extrémité longitudinale (6L2) par laquelle le picot (6) est fixé à la plaque (9) et une seconde extrémité longitudinale (6L1) pourvue d'une pointe (19), et **en ce que** chacun desdits picots (6) comprend, entre les première et seconde extrémités longitudinales (6L2, 6L1), un tronc (12) à section transversale sensiblement constante.

4. Procédé de fabrication selon la revendication 3,
**caractérisé en ce que**, pour au moins certains desdits picots (6), la section transversale (S1 à S6) du tronc (12) présente une surface incluse dans un cercle de diamètre compris entre 0,8 et 1 millimètre.

5. Procédé de fabrication selon l'une quelconque des revendications 3 et 4,
**caractérisé en ce que**, pour au moins certains desdits picots (6), la section transversale (S1 à S6) du tronc (12) présente l'une des formes suivantes : ronde, polygonale, elliptique, oblongue, en forme de goutte d'eau.

6. Procédé de fabrication selon l'une quelconque des revendications précédentes,
**caractérisé en ce que** l'assemblage de couches (2) comporte une couche auxiliaire (C4) pourvue d'un grillage.

7. Procédé de fabrication selon l'une quelconque des revendications précédentes,
**caractérisé en ce que** les fibres (3) de la couche dégivrante (C2) sont en carbone.

8. Procédé de fabrication selon la revendication 2,
**caractérisé en ce que** le nombre et la surface de la section transversale (S1 à S6) des picots (6) sur la plaque (9) sont adaptés pour créer un nombre et une taille de perforations (10) dans la peau acoustique (1) permettant de conférer à ladite peau acoustique (1) une absorption acoustique privilégiée dans au moins une gamme de fréquences acoustiques donnée.

9. Procédé de fabrication selon la revendication 8,
**caractérisé en ce que** le dispositif d'écartement (5) comporte au moins deux zones différentes, **en ce que** le nombre et la surface de la section transversale des picots (6) sur une première desdites zones sont adaptés afin de conférer à une première partie de la peau acoustique (1) une absorption acoustique privilégiée dans au moins une première gamme de fréquences acoustiques, et **en ce que** le nombre et la surface de la section transversale des picots (6) sur la seconde desdites zones sont adaptés afin de conférer à une seconde partie de la peau acoustique (1) une absorption acoustique privilégiée dans au moins une seconde gamme de fréquences acoustiques, ladite seconde gamme de fréquences acoustiques étant différente de ladite première gamme de fréquences acoustiques

10. Procédé de fabrication selon l'une quelconque des revendications précédentes,
**caractérisé en ce que** l'étape d'écartement (E2) consiste à générer un déplacement relatif entre le dispositif d'écartement (5) et l'assemblage de couches (2) de manière à mettre en place le dispositif d'écartement (5).

11. Procédé de fabrication selon l'une quelconque des revendications précédentes,
**caractérisé en ce que** l'étape d'écartement (E2) consiste à générer des perforations de surface réduite au niveau d'une face dite aérodynamique (21A) de l'assemblage de couches (2) par rapport à l'intérieur de l'assemblage de couches (2).

12. Peau acoustique dégivrante,
**caractérisée en ce qu'**elle est obtenue par la mise en oeuvre du procédé de fabrication spécifié sous l'une quelconque des revendications 1 à 11.

13. Méthode de fabrication d'un panneau acoustique (20) comportant une structure acoustique (16) pourvue d'une structure alvéolaire (17), d'une peau acoustique (1) dégivrante et d'une peau dite arrière (18),
**caractérisée en ce qu'**elle comporte un procédé de fabrication selon l'une quelconque des revendications 1 à 11 au moins pour fabriquer ladite peau acoustique (1) dégivrante.

14. Méthode de fabrication selon la revendication 13,
**caractérisée en ce qu'**elle comporte au moins la pluralité d'opérations successives suivantes :
- une opération de fabrication de la peau acoustique (1) dégivrante, en mettant en oeuvre ledit procédé de fabrication ;
- une opération de fabrication de la structure alvéolaire (17) ;
- une opération de fabrication de la peau arrière (18) ; et
- une opération de fixation de la peau acoustique (1) dégivrante et de la peau arrière (18) sur la structure alvéolaire (17).

15. Méthode de fabrication selon la revendication 13,
**caractérisée en ce que** :
- l'étape de fabrication (E1) dudit procédé de fabrication consiste à fabriquer un ensemble monobloc comprenant une structure alvéolaire (17), une peau arrière (18) et une peau acoustique (1) dégivrante, ladite peau acoustique (1) dégivrante correspondant audit assemblage de couches (2) ; et
- l'étape de cuisson (E3) dudit procédé de fabrication consiste à réaliser une cuisson de l'ensemble monobloc ainsi formé pour obtenir la structure acoustique (16) qui est monobloc.

16. Panneau acoustique,
**caractérisé en ce qu'**il est obtenu par la mise en oeuvre de la méthode de fabrication spécifiée sous l'une quelconque des revendications 13 à 15.
